(19) Europäisches Patentamt
European Patent Office
Office européen des brevets

(11) Veröffentlichungsnummer: **0 187 350**
**B1**

(12) # EUROPÄISCHE PATENTSCHRIFT

(45) Veröffentlichungstag der Patentschrift: **02.08.89**

(51) Int. Cl.⁴: **C 08 G 65/40,** C 08 L 71/00

(21) Anmeldenummer: **85116333.7**

(22) Anmeldetag: **20.12.85**

(54) **Verfahren zur Herstellung von Formkörpern aus aromatischen Polyethern.**

(30) Priorität: **11.01.85 DE 3500706**

(43) Veröffentlichungstag der Anmeldung: **16.07.86 Patentblatt 86/29**

(45) Bekanntmachung des Hinweises auf die Patenterteilung: **02.08.89 Patentblatt 89/31**

(84) Benannte Vertragsstaaten: **BE DE FR GB IT NL**

(56) Entgegenhaltungen:
**EP-A-0 157 732**
**EP-A-0 163 893**
**EP-A-0 187 348**
**EP-A-0 193 894**
**DE-A-3 429 670**
**FR-A-2 023 829**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Zeiner, Hartmut, Dr., Johann- Strauss-Strasse 13, D-6831 Plankstadt (DE)**
Erfinder: **Heinz, Gerhard, Dr., Im Vogelsang 2, D-6719 Weisenheim (DE)**
Erfinder: **Neumann, Peter, Dr., Franz- Schubert-Strasse 1, D-6908 Wiesloch (DE)**
Erfinder: **Fischer, Jürgen, Dr., Thomas- Mann-Strasse 62, D-6700 Ludwigshafen (DE)**
Erfinder: **Nissen, Dietmar, Dr., Ziegelhaeuser Landstrasse 31, D-6900 Heidelberg (DE)**
Erfinder: **Schaefer, Gerhard, Dr., Schafrippel 2, D-6900 Heidelberg (DE)**

EP 0 187 350 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Aromatische Polyether sind hochtemperaturbeständige Kunststoffe, die thermoplastisch zu hochwertigen Formteilen verarbeitbar sind. In den DE-A-1 545 106 und 1 957 091 wird die Herstellung von aromatischen Polyethersulfonen durch nucleophile Polykondensation aus Dihalogenaromaten und Bisphenolen beschrieben. Diese Polyethersulfone sind in organischen Lösungsmitteln löslich, sie haben daher eine geringe Lösungsmittelbeständigkeit und sind spannungsrißanfällig. Für manche Anwendungszwecke ist auch ihre Wärmeformbeständigkeit nicht ausreichend hoch.

Der Erfindung lag daher die Aufgabe zugrunde, die Lösungsmittelbestandigkeit und Spannungsrißbeständigkeit sowie gegebenenfalls die Wärmeformbeständigkeit von Formkörpern aus aromatischen Polyethern zu verbessern. Eine weitere Aufgabe der Erfindung bestand darin, neue aromatische Polyether bereitzustellen, aus denen lösungsmittelbeständige und spannungsrißbeständige Formkörper hergestellt werden können.

Die erstgenannte Aufgabe wird dadurch gelöst, daß man aus aromatischen Copolyethern, aufgebaut aus Einheiten der Formel A-B-, wobei

A 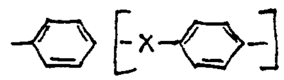 -Gruppen

(mit X = $SO_2$ oder CO und n = 1 oder 2), und
B zu 1 bis 99 Mol.-%

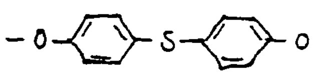 -Gruppen

und zu 99 bis 1 Mol.-%

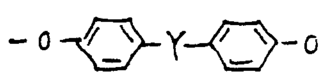 -Gruppen

(mit Y = O, CO, $SO_2$ oder $C(CH_3)_2$),
durch thermoplastische verformung Formkörper, die gegebenenfalls 5 - 60 Gew.-% Verstärkungsfasern mit einer Länge von bis zu 25 mm und/oder mineralische Füllstoffe, jedoch keine orientierten Endlosfasern enthalten, herstellt und darin das Polymere durch Erhitzen auf Temperaturen von über 200°C so vernetzt, daß seine durch eintägige Extraktion in siedendem Dichlormethan bestimmten löslichen Anteile auf einen Wert von unter 60 % erniedrigt werden.

In dem Artikel "Polyaryl Ethers by Nucleophilic Aromatic Substitution I" von R.N. Johnson et al. in J. Pol. Sci. Part A-1, 1967, Seite 2383 ist die Herstellung von Polyetherthioethersulfon durch Umsetzung von 4,4'-Dichlordiphenylsulfon mit dem Dinatriumsalz des Thiodiphenols beschrieben. Das erhaltene Polymere ist in Chloroform löslich. Von einer thermischen Nachbehandlung ist nicht die Rede.

Ein weiterer Gegenstand der Erfindung sind neue aromatische Copolyether, enthaltend Einheiten der Formel -A-B-, wobei

A 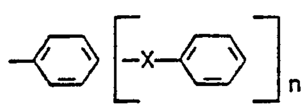 –Gruppen

(mit X = $SO_2$ oder CO und n = 1 oder 2), und
B zu 1 bis 99 Mol.-%, vorzugsweise 5 bis 50 Mol.-%

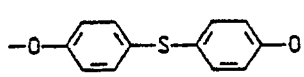 –Gruppen

und zu 99 bis 1 Mol.-%, vorzugsweise 95 bis 50 Mol.-%

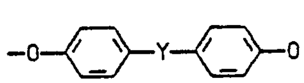 –Gruppen

(mit Y = O, CO, $SO_2$ oder $C(CH_3)_2$) sind.

Solche Copolyether sind besonders gut für den erfindungsgemäßen Zweck geeignet, da sie im Gegensatz zu Homopolymeren weniger Schwefelbrücken und somit ein geringeres Vernetzungspotential enthalten. Man kann durch die Einstellung der Menge an Comonomeren und damit der Menge an -S-Gruppierungen das Vernetzungspotential gezielt einstellen und auf diese Weise die Geschwindigkeit und das Ausmaß der Vernetzung steuern. Bevorzugte Comonomere sind Bisphenol A und Dihydroxydiphenylsulfon.

Die Herstellung der erfindungsgemäßen aromatischen Copolyether kann nach den üblichen Verfahren erfolgen. Bevorzugt werden 4,4'-Thiodiphenol, zusammen mit 1 bis 99 Mol.-% anderer Bisphenole, und Dichlordiphenylsulfon bzw. Dihalogenbenzophenon, vorzugsweise Difluorbenzophenon, in etwa äquivalenten Mengen in Gegenwart von wasserfreiem Alkalicarbonat polykondensiert. Dies kann in Abwesenheit von

Lösungsmitteln durchgeführt werden, bevorzugt wird jedoch in einem polaren, aprotischen Lösungsmittel bei Temperaturen zwischen 120 und 200°C, vorzugsweise zwischen 150 und 180°C, gearbeitet, wobei zweckmäßigerweise das entstehende Wasser mit Hilfe eines Azeotropbildners entfernt wird.

Als wasserfreie Alkalicarbonate kommen beispielsweise Natrium- und vorzugsweise Kaliumcarbonat oder deren Mischungen in Betracht, bevorzugt in Mengen von 1,0 bis 2,2 Mol, bezogen auf Thiodiphenol.

Als polare, aprotische Lösungsmittel gelangen Verbindungen zur Anwendung, die zu den N-substituierten Säureamiden. den Sulfoxiden oder Sulfonen zählen, beispielsweise N,N-Dimethylformaid, N,N-Dimethylacetamid, N-Methylpyrrolidon, Dimethylsulfoxid, Dimethylsulfon, Tetramethylsulfon (Sulfolan) oder Diphenylsulfon. Bevorzugt wird N-Methylpyrrolidon verwendet.

Die polaren, aprotischen Lösungsmittel werden in Mengen von 5 bis 100, vorzugsweise von 10 bis 20 Molen, bezogen auf 1 Mol Thiodiphenol, verwendet. Dies bedeutet, daß die Reaktionslösungen in Abwesenheit von Alkalicabonat und Azeotropbildner einen Feststoffgehalt von 5 bis 50 Gew.-%, vorzugsweise von 20 bis 35 Gew.-%, bezogen auf das Gesamtgewicht, aufweisen.

Geeignete Wasser-Azeotropbildner sind alle Substanzen, die im Bereich der Reaktionstemperatur bei Normaldruck sieden und sich mit dem Reaktionsgemisch homogen mischen lassen, ohne chemische Reaktionen einzugehen. Als Azeotropbildner der genannten Art seien beispielsweise genannt: Chlorbenzol, Toluol und Xylol.

Zur Durchführung dieses Verfahrens wird die Reaktionsmischung in der ersten Reaktionsstufe bis zur Abtrennung von mindestens 90 Gew.-%, vorzugsweise 90 bis 96 Gew.-%, bezogen auf das Gesamtgewicht, der theoretisch möglichen Wassermenge vorteilhafterweise 0,5 bis 4 Stunden, vorzugsweise 1 bis 2 Stunden erhitzt.

In der zweiten Reaktionsstufe wird das Reaktionsgemisch bis zur völligen Wasserfreiheit polykondensiert und hierzu wird das Reaktionsgemisch ständig mit weiterem Azeotropbildner versetzt und gleichzeitig das entstehende Azeotropgemisch abdestilliert. Die Reaktionszeit beträgt ungefähr 0,5 bis 4 Stunden, vorzugsweise 1 bis 2 Stunden.

Die Reaktionszeit in der dritte Stufe zur Polykondensation bis zur gewünschten Viskosität des Copolyethers beträgt ungefähr 3 bis 12 Stunden, vorzugsweise 4 bis 8 Stunden. Danach wird die Polykondensation durch Einleiten von Methylchlorid abgestoppt. Die Reaktionszeit hierfür beträgt ungefähr 0,1 bis 2, vorzugsweise 0,2 bis 0,5 Stunden.

Die Isolierung des Copolyethers in der vierten Stufe schließlich kann auf verschiedene Weise durchgeführt werden. Eine Abscheidung des festen Polymeren kann durch Mischung der Reaktionslösung mit einem Fällungsmittel, z. B. Wasser und/oder Methanol, durch starkes Rühren, Verspritzen oder Verdüsen geschehen. Andererseits kann das Lösungsmittel auch verdampft werden. Die anorganischen Bestandteile können durch geeignete Methoden wie Lösen, Filtrieren oder Sieben aus dem Polyether entfernt werden.

Die so hergestellten aromatischen Copolyether weisen Grenzviskositäten (gemessen bei 25°C in Methylpyrrolidon) von 0,2 bis 2.0, bevorzugt von 0,3 bis 1,5 auf. Dies entspricht einem mittleren Polymerisationsgrad von 50 bis 500, bevorzugt von 70 bis 250. Die Glastemperatur liegt zwischen 160 und 250°C.

Dem aromatischen Copolyether können übliche Zusatzstoffe zugemischt werden, beispielsweise Verstärkungsfasern aus Glas, Kohlenstoff oder aromatischem Polyamid, mit einer Länge von bis zu 2,5 cm, vorzugsweise von weniger als 0,1 cm, sowie silikatische Füllstoffe, wie Wollastonit, jeweils in Mengen von 5 bis 60 Gew.-%, bezogen auf die Mischung. Darüber hinaus können Flammschutzmittel, Stabilisatoren, Farbstoffe und Vernetzungshilfsmittel zugesetzt werden.

Die Polymeren werden gegebenenfalls zusammen mit den Zusatzstoffen thermoplastisch zu Formkörpern verformt. Dies kann beispielsweise durch Verpressen, Extrudieren, Spritzgießen oder Tiefziehen erfolgen. Man kann auch Lösungen oder Dispersionen der Polymeren in eine Form bringen und das Polymere nach Entfernung des Lösungs- bzw. Dispersionsmittels in der Schmelze formen.

Die Copolyether können auch anstelle von Polysulfonen analog DE-A-1 720 428 zur Modifizierung von Epoxidharzen und anderen Reaktionsharzformulierungen eingesetzt werden. Besonders vorteilhaft werden Epoxidharze, die 10 bis 100 Gew.-Teilen Copolyether, bezogen auf das Epoxidharz zugesetzt enthalten, zur Herstellung von Prepregs mit kontrolliertem Fließverhalten verwendet.

Bei einer bevorzugten Ausführungsform der Erfindung wird in den so hergestellen Formkörpern das Polymere so vernetzt, daß seine löslichen Anteile (gemessen durch eintägige Extraktion mit siedendem Dichlormethan in einem Soxhlet-Gerät) von 100 % auf einen Wert unter 60 %, vorzugsweise zwischen 5 und 50 % erniedrigt werden, wobei die am Formkörper gemessene Glastemperatur praktisch nicht erhöht wird. Der dabei erzielte Vernetzungsgrad reicht aus um die Spannungsrißanfälligkeit des Formkörpers zu beheben.

Will man bei einer anderen Ausführungsform darüber hinaus auch noch die Wärmestandfestigkeit anheben, so muß man stärker vernetzen, vorzugsweise so stark, daß die am Formkörper gemessene Glastemperatur um mindestens 20°C ansteigt und die löslichen Anteile auf einen Wert unter 5 % erniedrigt werden. Einige Polyetherthioetherketone sind von vornherein in Dichlormethan schwer löslich. Hier ist die erfindungsgemäße Vernetzung nur sinnvoll zur Erhöhung der Glastemperatur und damit der Wärmeformbeständigkeit.

Der Grad der Vernetzung ist durch die Temperatur und die Dauer der Behandlung beeinflußbar, er ist ferner vom Gehalt des Polymeren an Schwefelbrücken abhängig. Die Vernetzungstemperatur liegt auf jeden Fall über 200°C, sie kann vorzugsweise im Bereich zwischen 250 und 450°C variiert werden, muß aber unter der Temperatur gehalten werden, bei der sich das Polymere merklich zersetzt. Vorzugsweise liegt sie 120 bis 200°C über der Glastemperatur des aromatischen Copolyethers. Die Dauer der Temperbehandlung kann zwischen

einigen Minuten und mehreren Tagen variiert werden, für geringe Vernetzung, wobei nur die Löslichkeit verringert werden soll, genügen im allgemeinen 10 bis 200 min; soll auch noch die Glastemperatur angehoben werden, so muß man schon 1 bis 10 Stunden lang tempern.

Die erfindungsgemäß hergestellten Formkörper können als Kraftfahrzeugteile oder in der Luft- und Raumfahrt eingesetzt werden.

Durch Zusatz von Vernetzungskatalysatoren in Mengen von 0,5 bis 5 Gew.-% kann die Vernetzung beschleunigt werden. In Frage kommen z. B. Lewis-Säuren, wie Aluminiumchlorid oder Zinkchlorid, Metalloxide, wie Aluminiumoxid oder Eisenoxid, sowie Diarylendisulfide oder Dithiophosphorsäurederivate.

Die in den Beispielen genannten Teile und Prozente beziehen sich auf das Gewicht.

**Beispiel 1**

a) Herstellung des Copolyethers
Ein Gemisch aus 0,125 Mol Bisphenol A, 0,125 Mol 4,4'-Thiodiphenol und 0,25 Mol Dichlordiphenylsulfon wurden unter Inertgas in 600 ml N-Methylpyrrolidon und 250 ml Toluol gelöst und mit 0,26 Mol wasserfreiem Kaliumcarbonat versetzt. Das Reaktionsgemisch wurde unter ständigem Abdestillieren eines azeotropen Gemisches aus Wasser und Toluol innerhalb von 2 1/2 Stunden auf 150°C erhitzt. Nach vollständigem Entfernen des Toluols wurde die Temperatur auf 180°C gesteigert und das Reaktionsgemisch 12 Stunden bei dieser Temperatur belassen. Durch 30-minütiges Einleiten eines Methylchlorid-Stromes wurde die Polykondensation abgebrochen.
Die anorganischen Bestandteile werden nach Zugabe von 300 ml Chlorbenzol abfiltriert und das Polymere in einem Gemisch aus gleichen Teilen 1-%-iger Essigsäure und Methanol gefällt. Nach sorgfältigem Waschen mit Wasser und Methanol wird 12 Stunden bei 100°C im Vakuum getrocknet. Die Glastemperatur des erhaltenen Polyetherthioethersulfons beträgt 175°C.
Das Polymere ist vollständig in Dichlormethan löslich.

b) Herstellung des Formkörpers und Vernetzung
In einer Presse wurden 20 g des Copolyetherthioethersulfons erst 5 min bei 350°C/5 bar, dann 15 min bei 350°C/200 bar verpresst, schließlich wurde 15 min lang bei 200 bar abgekühlt.
Die erhaltene, 1 mm starke Platte enthielt noch 43 % lösliche Anteile, die Glastemperatur betrug 180°C.

**Beispiel 2**

a) Herstellung des Copolyethers
Ein Gemisch aus 0,125 Mol 4,4-Thiodiphenol, 0,125 Mol Dihydroxydiphenylsulfon und 0,25 Mol 4,4-Dichlordiphenylsulfon wurde mit 0,25 Mol Kaliumcarbonat versetzt und wie unter a) beschrieben polykondensiert und aufgearbeitet.

b) Herstellung des Formkörpers und Vernetzung
Aus den amorphen Copolymeren wurde, wie unter 1b beschrieben, eine Preßplatte hergestellt.
Die löslichen Anteile betrugen 52 %, die Glastemperatur war praktisch nicht erhöht.

**Beispiel 3**

a) Herstellung des Copolyethers
Ein Gemisch aus 0,125 Mol Bisphenol A, 0,125 Mol Thiodiphenol und 0,25 Mol 1,4-Bis-(4-fluorbenzoyl)-benzol wurde unter Inertgas in 600 ml N-Methylpyrrolidon und 250 ml Toluol gelöst und mit 0,26 Mol wasserfreiem Kaliumcarbonat versetzt. Die Polykondensation und Aufarbeitung wurde wie in Beispiel 1 beschrieben durchgeführt.

b) Herstellung des Formkörpers und Vernetzung
Wie in 2b beschrieben, wurden aus dem Copolyether kurzglasfaserverstärkte Normkleinstäbe hergestellt.
Diese wurden in einem Umluftofen innerhalb von 5 Stunden auf 350°C aufgeheizt und 1 1/2 Stunden bei dieser Temperatur belassen.
Die löslichen Polymeranteile waren kleiner als 2 %, die Glastemperatur war auf 240°C angestiegen.

**Patentansprüche**

1. Verfahren zur Herstellung von spannungsrißbeständigen Formkörpern auf Basis von temperaturbeständigen aromatischen Copolyether, aufgebaut aus Einheiten der Formel -A-B-, wobei

A 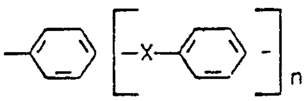 —Gruppen

(mit X = $SO_2$ oder CO und n = 1 oder 2), und
B zu 1 bis 99 Mol.-%

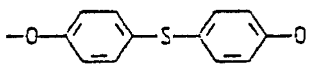 —Gruppen

und zu 95 bis 1 Mol.-%

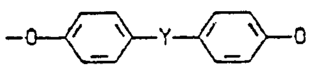 —Gruppen

(mit Y = O, CO, $SO_2$ oder $C(CH_3)_2$) sind,
die gegebenenfalls 5 bis 60 Gew.-% Verstärkungsfasern einer Länge von bis zu 25 mm und/oder mineralische Füllstoffe, jedoch keine orientierten Endlosfasern enthalten, durch thermoplastische Verformung des Polymeren, dadurch gekennzeichnet, daß in dem enthaltenen Formkörper das Polymere durch Erhitzen auf Temperaturen von über 200°C so vernetzt wird, daß seine durch eintägige Extraktion in siedendem Dichlormethan bestimmten löslichen Anteile auf einen Wert von unter 60 % erniedrigt werden.

2. Verfahren zur Herstellung von Formkörpern nach Anspruch 1, dadurch gekennzeichnet, daß das Polymere so vernetzt wird, daß seine löslichen Anteile auf einen Wert unter 5 % erniedrigt werden und die Glastemperatur des Formkörpers um mindestens 20°C ansteigt.

3. Aromatische Copolyether, enthaltend Einheiten der Formel -A-B, wobei

A 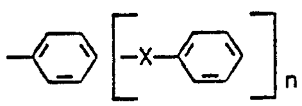 —Gruppen

mit S= $SO_2$ oder CO und n = 1 oder 2), und
B zu 1 bis 99 Mol.-%

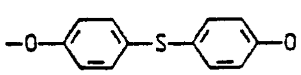 —Gruppen

und zu 99 bis 1 Mol.-%

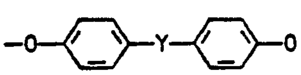 —Gruppen

(mit Y = O, CO, $SO_2$ oder $C(CH_3)_2$) sind.

**Claims**

1. A process for preparing stress cracking resistant shaped articles based on heat-resistant aromatic copolyethers composed of units of the formula -A-B- where

A is 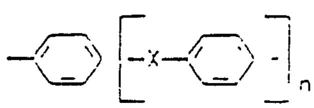

(X being $SO_2$ or CO and n being 1 or 2) and
B is

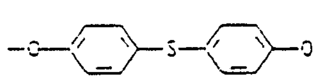

in an amount of from 1 to 99 mol. % and

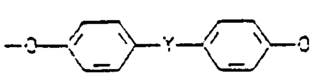

(Y being O, CO, $SO_2$ or $C(CH_3)_2$) in an amount of from 99 to 1 mol. %,

which articles may contain from 5 to 60 % by weight of reinforcing fibers having a length of not more than 25 mm and/or mineral fillers but contain no oriented continuous fibers, by thermoplastic deformation of the polymer, which comprises crosslinking the polymer in the resulting shaped article by heating to above 200° C in such a way that the solubles content in the polymer, as determined by extraction in boiling dichloromethane for one day, is reduced to below 60 %.

2. A process for preparing shaped articles as claimed in claim 1, wherein the polymer is crosslinked in such a way that its solubles content is reduced to below 5 % and the glass transition temperature of the shaped article rises by not less than 20° C.

3. An aromatic copolyether containing units of the formula -A-B- where

A is 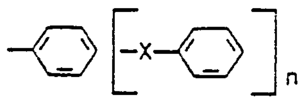

(X being $SO_2$ or CO and n being 1 or 2) and
B is

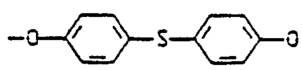

in an amount of from 1 to 99 mol. % and

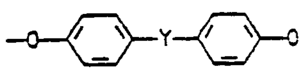

(Y being O, CO, $SO_2$ or $C(CH_3)_2$) in an amount of from 99 to 1 mol. %.

**Revendications**

1. Procédé de fabrication de corps moulés résistant au fendillement par contrainte, à base dé copolyéthers aromatiques, stables aux températures, constitués d'unités dé la formule -A-B-, dans lesquelles A représente des radicaux

A 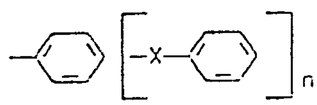

(avec X = $SO_2$ ou CO et n = 1 ou 2) et
B représente jusqu'à 1 à 99 % molaires de radicaux

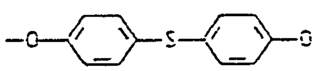

et jusqu'à 99 à 1 % molaires de radicaux

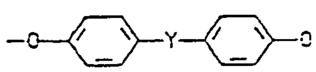

(avec Y = O, CO, $SO_2$ ou $C(CH_3)_2$),
qui peuvent contenir éventuellement 5 à 60 % en poids de fibres de renforcement d'une longueur allant jusqu'à 25 mm et/ou de charges minérales, mais cependant pas de fibres sans fin orientées, par déformation thermoplastique des polymères, caractérisé en ce que, dans les articles ou corps moulés obtenus, le polymère est réticulé par chauffage à des températures supérieures à 200° C, de manière telle que ses fractions solubles, comme déterminées par une extraction d'un jour dans le dichlorométhane bouillant, soient réduites jusqu'à une valeur inférieure a 60 %.

2. Procédé de fabrication de corps ou d'articles moulés suivant la revendication 1, caractérisé en ce que le polymère est réticulé de manière telle que ses fractions solubles soient réduites jusqu'à une valeur inférieure à 5 % et la température de transition vitreuse du corps ou de l'article moulé s'éléve d'au moins 20° C.

3. Copolyéthers aromatiques, contenant des unités de la formule -A-B-, dans laquelle
A représente des radicaux

A 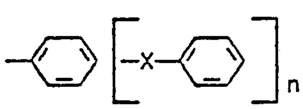

(avec X = $SO_2$ ou CO et n = 1 ou 2), et
B représente jusqu'à 1 à 99 % molaires de radicaux de la formule

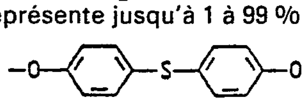

et jusqu'à 99 à 1 % molaires de radicaux

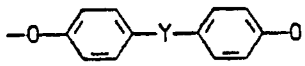

(avec Y = O, CO, $SO_2$ ou $C(CH_3)_2$).